# EUROPÄISCHE PATENTANMELDUNG

(11) **EP 0 926 034 A2**
(43) Veröffentlichungstag der Anmeldung: **30.06.1999**
(21) Anmeldenummer: 98890368.8
(22) Anmeldetag: 14.12.1998
(51) Int. Cl.: B60T 17/06

(54) **Vorrichtung zur Montage von Druckluftbehältern an einem Fahrzeugrahmen**

(30) Priorität: 15.12.1997 AT 78097 U
(71) Anmelder: Alutech Gesellschaft m.b.H., 5651 Lend (AT)
(72) Erfinder: Gerlach, Karl-Heinz, 5622 Goldegg (AT); Binderberger, Karl, 5620 Schwarzach (AT)
(74) Vertreter: Weiser, Andreas, Dip.-Ing.

(57) **Zusammenfassung**

Vorrichtung zur Montage von Druckluftbehältern an einem Fahrzeugrahmen, mit einer am Fahrzeugrahmen befestigbaren Halteeinrichtung (1-5), die an ihrem Umfang mit Aussparungen (6-9) zur Aufnahme der Druckluftbehälter (10) in einer im wesentlichen parallelen Anordnung ausgestattet ist, und mit Spannbändern (11-14), welche um die Druckluftbehälter (10) herumgeführt sind und diese in den Aufnahmen (6-9) halten, wobei die Spannbänder (11-14) aus faserverstärktem Kunststoff gefertigt sind.

## Beschreibung

Die vorliegende Erfindung betrifft eine Vorrichtung zur Montage von Druckluftbehältern an einem Fahrzeugrahmen, mit einer am Fahrzeugrahmen befestigbaren Halteeinrichtung, die an ihrem Umfang mit Aussparungen zur Aufnahme der Druckluftbehälter in einer im wesentlichen parallelen Anordnung ausgestattet ist, und mit Spannbändern, welche um die Druckluftbehälter herumgeführt sind und diese in den Aufnahmen halten.

Derartige Vorrichtungen sind beispielsweise aus der DE 42 11 688 oder der US 3 945 687 bekannt. Bei den bekannten Vorrichtungen werden Spannbänder aus Metall verwendet, welche der Korrosion unterliegen. Die Druckluftbehälter sind in der Regel ebenfalls aus Metall gefertigt, so daß sich bei unterschiedlichen Metallarten der Druckluftbehälter einerseits und der Spannbänder anderseits Kontaktspannungen ergeben, welche die Korrosion beschleunigen.

Darüber hinaus wird bei den bekannten Vorrichtungen die Halteeinrichtung durch aufwendige Verschraubungen am Fahrzeugrahmen befestigt, was die Montage erschwert.

Die Erfindung setzt sich daher zum Ziel, eine Vorrichtung der einleitend genannten Art zu schaffen, welche besonders korrosionsbeständig ist und dabei leichtgewichtig aufgebaut und einfach montierbar ist. Dieses Ziel wird bei einer Vorrichtung der genannten Art dadurch erreicht, daß die Spannbänder aus faserverstärktem Kunststoff gefertigt sind.

Die erfindungsgemäße Fertigung der Spannbänder aus faserverstärktem Kunststoff ergibt eine besonders leichtgewichtige Konstruktion. Darüber hinaus wird die Korrosionsbeständigkeit wesentlich erhöht, einerseits, weil die Spannbänder selbst aus Kunststoff gefertigt sind, anderseits weil sich in Verbindung mit den Druckluftbehältern keinerlei Kontaktspannungen an den Schnittstellen unterschiedlicher Metallpaarungen ergeben können.

Besonders vorteilhaft ist es, wenn die Spannbänder aus glasfaserverstärktem Epoxidharz gefertigt sind, insbesondere wenn der Glasfaseranteil der Spannbänder mindestens 40 Vol.-% beträgt und/oder mindestens 90% aller Glasfasern in Längsrichtung des Spannbandes verlaufen, was eine ausgezeichnete Reißfestigkeit ergibt.

Besonders günstig ist es ferner, wenn die Spannbänder mit einer Gummibeschichtung versehen sind. Die Gummibeschichtung schützt das Spannband gegenüber Außeneinflüssen und erhöht dadurch seine Lebensdauer. Die Gummibeschichtung schützt darüber hinaus die Behälterwand vor Nässe, die - kontaminiert mit korrosiven Mitteln (pH-Wert über 8) - sonst zu Spaltkorrosion führen kann. Weiters verhindert sie ein Verrutschen der Behälter. Schließlich wird eine geringfügig federnde Lagerung der Druckluftbehälter erzielt.

Eine besonders vorteilhafte Ausführungsform der Erfindung, welche eine einfache Montage und bis zu einem gewissen Grad eine Vorfertigung des Druckluftbehälterpaketes gestattet, zeichnet sich dadurch aus, daß die Halteeinrichtung zumindest zwei voneinander beabstandete Halteplatten aufweist, die von einem zentralen, am Fahrzeugrahmen befestigbaren langgestreckten Träger durchsetzt sind und an ihrem Umfang mit den Aussparungen versehen sind. Dies ermöglicht die Vorfertigung eines Verbundes bzw. Paketes von mehreren Druckluftbehältern, der bzw. das in vorgefertigem Zustand dem Endanwender zur Verfügung gestellt werden kann, was Vorteile in der Disponierung, Lagerhaltung, Montage und beim Lackieren bietet. Die erfindungsgemäße Konstruktion ergibt ein fest mit dem dem Fahrzeugrahmen montierbaren Träger verspanntes Druckluftbehälterpaket.

Bevorzugt wird vorgesehen, daß der Träger aus zwei miteinander verbindbaren Teilen zusammengesetzt ist, von denen der eine am Fahrzeugrahmen befestigbar ist und der andere die Halteplatten trägt. Dadurch kann der am Fahrzeugrahmen befestigbare Teil mit dem Fahrzeugrahmen mitlackiert werden, oder an diesem in einem Zwischenschritt vormontiert werden. Eine besonders einfache Endmontage ergibt sich dabei, wenn gemäß einem weiteren bevorzugten Merkmal der die Halteplatten tragende Teil auf den anderen Teil koaxial aufschiebbar ist.

Bei einer weiteren bevorzugten Ausführungsform der Erfindung wird vorgesehen, daß die Spannbänder um einen oder zwei Druckluftbehälter und um den Träger im Bereich neben den Halteplatten geführt sind. Auf diese Weise kann jeder einzelne Druckluftbehälter bzw. jedes einzelne Druckluftbehälterpaar unabhängig von den anderen zu Wartungs- und Reparaturzwecken getauscht werden.

Die Erfindung wird nachstehend an Hand eines in den Zeichnungen dargestellten Ausführungsbeispieles näher erläutert. In den Zeichnungen zeigen die
Fig. 1 und 2 die erfindungsgemäße Vorrichtung mit vier darin aufgenommenen Druckluftbehältern in der Seitenansicht bzw. der Stirnansicht, und
Fig. 3 zeigt einen Ausschnitt von Fig. 1 in der Draufsicht.

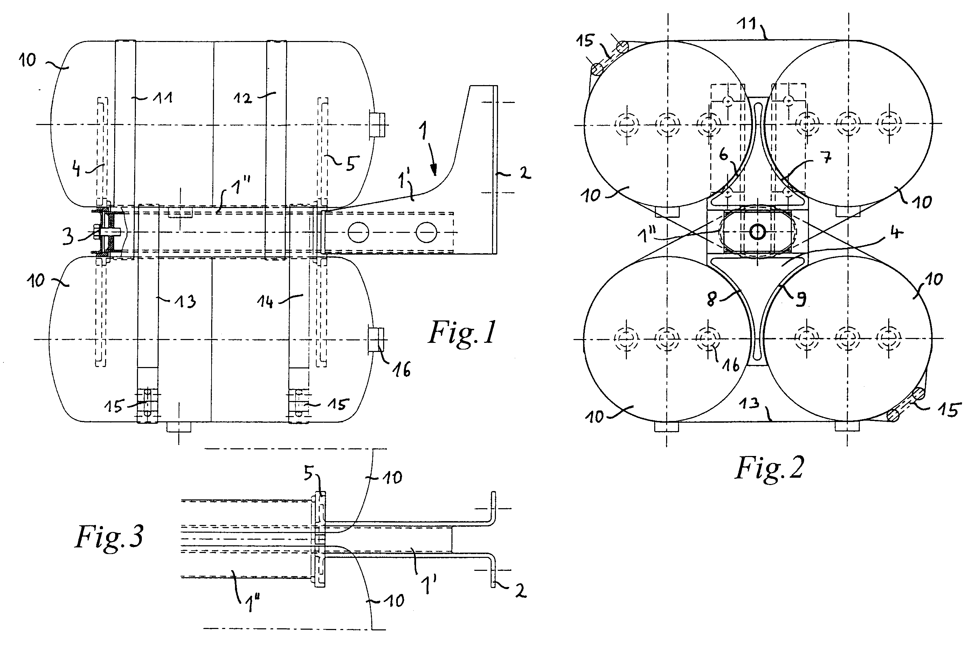

Die in den Fig. 1 bis 3 dargestellte Vorrichtung umfaßt einen langgestreckten Träger 1, der bei 2 an einem (nicht dargestellten) Fahrzeugrahmen befestigbar ist. Der Träger 1 ist aus zwei Teilen 1', 1'' zusammengesetzt, u.zw. einem ersten Teil 1', der direkt am Fahrzeugrahmen befestigbar ist, und einem zweiten Teil 1'' in Form eines ovalen Rohres. Der Teil 1'' kann so in koaxialer Richtung auf den ersten Teil 1' aufgeschoben und anschließend mit Hilfe einer Schraube 3 gesichert werden.

Der aufschiebbare Teil 1'' des Trägers 1 durchsetzt mittig und trägt zwei voneinander beabstandete Halteplatten 4, 5, die an ihrem Umfang Aussparungen 6-9 aufweisen, welche an den Außenumfang von Druckluftbehältern 10 angepaßt sind. Die Druckluftbehälter 10 sind im wesentlichen zylindrisch, und die Aussparungen 6-9 haben die Form eines Kreisbogens zu etwa 90°. Es können auch mehr oder weniger als vier Druckluftbehälter vorgesehen werden, wobei die Aussparungen dann entsprechend angeordnet und ausgeformt sein müssen.

Es können mehr als zwei Halteplatten 4, 5 verwendet werden, oder die Halteplatten 4, 5 können untereinander über entsprechende Auflagebleche, welche den Konturen der Aufnahmen 6-9 folgen, zu einem Körper verbunden werden.

Die Druckluftbehälter 10 werden in den Aufnahmen 6-9 mit Hilfe von vier Spannbändern 11-14 gehalten, die im dargestellten Fall jeweils um zwei Druckluftbehälter 10 und um den Längsträger 1, genauer um den rohrförmigen Teil 1'', im Bereich zwischen den Halteplatten 4, 5 geführt und mittels Zurreinrichtungen 15 gespannt sind. Die Anzahl und der Verlauf der Spannbänder 11-14 können beliebig variiert werden; bei der dargestellten Aufteilung ergibt sich der Vorteil, daß die beiden oberen Druckluftbehälter unabhängig von den beiden unteren Druckluftbehältern montiert oder austauscht werden können.

Der Träger 1 bzw. sein Teil 1' kann sowohl normal als auch parallel zum Fahrzeugrahmen, beispielsweise mit Hilfe weiterer nicht dargestellter Schraubverbindungen, befestigt werden. Bei der dargestellten Orientierung der Druckluftbehälter 10 mit dem Verschraubungsbereich 2 des Trägers 1 zugekehrten Anschlüssen 16 ergibt sich der Vorteil, daß letztere in einem geschützten Bereich am Fahrzeugrahmen zu liegen kommen.

Der Trägerteil 1' wird bevorzugt aus Stahl gefertigt, der Trägerteil 1'' und die Halteplatten 4, 5 aus Aluminium.

Die Spannbänder 11-14 sind aus faserverstärkten Kunststoffbändern gefertigt. Bevorzugt sind die Spannbänder aus glasfaserverstärktem Epoxidharz gefertigt, wobei der Glasfaseranteil der Spannbänder mindestens 40 Vol.-% beträgt. Die Glasfasern im Spannband verlaufen überwiegend in Längsrichtung. Bevorzugt verlaufen mindestens 90% aller Glasfasern in Längsrichtung.

### Beispiel

In einer bevorzugten Ausführungsform wurde ein glasfaserverstärktes Epoxidharz-Spannband mit einem Glasfaseranteil von 44 Vol.-% und einem Epoxidharzanteil von 56 Vol.-% angefertigt. Das Spannband hatte eine Breite von 35 mm, eine Dicke von 1 mm und der Durchmesser der einzelnen Glasfasern betrug ca. 12 µm. 90% der Glasfasern verliefen in Längsrichtung des Spannbandes.

Das Spannband hatte eine Reißfestigkeit in Längsrichtung von 757 N/mm² und einen Elastizitätsmodul in Längsrichtung von 37 kN/mm². Daraus folgte eine Bruchdehnung von 2,04%, da das Material bis zum Bruch linear elastisch blieb. Die Querzugfestigkeit war wesentlich geringer, da die in dieser Richtung liegenden Glasfasern nur 10% des Faservolumens betrugen. Die Reißfestigkeit in Querrichtung lag bei etwa 100 N/mm².

Die Temperaturfestigkeit des verwendeten Epoxidharzsystems war 90°C. Wenn höhere Einsatztemperaturen erforderlich sind, können andere Harzsysteme mit einer Temperaturfestigkeit von bis zu 160°C verwendet werden, welche in der Technik bekannt sind.

Die Herstellung des Spannbandes erfolgte in einem zweistufigen Härtungsprozeß unter Verwendung eines Prepreg-Halbzeuges (Zwischenprodukt der ersten Härtungsstufe). In der ersten Härtungsstufe wurde das reaktive Epoxidharzgemisch in einem industriellen Verfahren auf das Glasgewebe aufgebracht und benetzte auf Grund seiner Dünnflüssigkeit die einzelnen Glasfasern. Das benetzte Glasgewebe wurde in einem Heiztunnel so weit gehärtet, bis das Harz tropffrei, aber klebrig war.

Dieses Vormaterial (Prepreg) wurde mit einer Zwischenlage aus Trennpapier auf Rollen der Endverarbeitungsstufe zugeführt. In dieser wurde nach einer Formgebung (Zuschneiden, Einlegen in eine Form) der Endhärtungsschritt ohne weiteres Zudosieren von Härtern, Aktivatoren usw. ausschließlich durch Temperaturaktivierung durchgeführt. Dabei wurde zusätzlich ein geringer Preßdruck (z.B. im Bereich von 4 bar) ausgeübt. Die Endhärtung erfolgte ohne Abspaltung von flüchtigen Substanzen, so daß danach ein kompakter Formstoff vorlag.

Das Ermüdungsverhalten des faserverstärkten Kunststoff-Spannbandes ist wesentlich besser als jenes von Metallspannbändern, da die Fasern selbst keine Ermüdung zeigen, Schädigungen allenfalls im Kunststoffverbund auftreten. Da bei den Spannbändern 11-14 im wesentlichen ein einachsiger Spannungszustand vorliegt, ist die Ermüdung auf Grund von Überbeanspruchungen der Matrix (des Kunststoffes) im wesentlichen vernachlässigbar.

Anstelle von Glasfasern können selbstverständlich auch andere zugfeste Fasern verwendet werden, beispielsweise Kohlefasern.

## Patentansprüche

1. Vorrichtung zur Montage von Druckluftbehältern an einem Fahrzeugrahmen, mit einer am Fahrzeugrahmen befestigbaren Halteeinrichtung (1-5), die an ihrem Umfang mit Aussparungen (6-9) zur Aufnahme der Druckluftbehälter (10) in einer im wesentlichen parallelen Anordnung ausgestattet ist, und mit Spannbändern (11-14), welche um die Druckluftbehälter (10) herumgeführt sind und diese in den Aufnahmen (6-9) halten, dadurch gekennzeichnet, daß die Spannbänder (11-14) aus faserverstarktem Kunststoff gefertigt sind.

2. Vorrichtung nach Anspruch 1, dadurch gekennzeichnet, daß die Spannbänder (11-14) aus glasfaserverstärktem Epoxidharz gefertigt sind.

3. Vorrichtung nach Anspruch 2, dadurch gekennzeichnet, daß der Glasfaseranteil der Spannbänder (11-14) mindestens 40 Vol.-% beträgt.

4. Vorrichtung nach Anspruch 2 oder 3, dadurch gekennzeichnet, daß mindestens 90 % aller Glasfasern in Längsrichtung des Spannbandes (11-14) verlaufen.

5. Vorrichtung nach einem der Ansprüche 1 bis 4, dadurch gekennzeichnet, daß die Spannbänder (11-14) mit einer Gummibeschichtung versehen sind.

6. Vorrichtung nach einem der Ansprüche 1 bis 5, dadurch gekennzeichnet, daß die Halteeinrichtung (1-5) zumindest zwei voneinander beabstandete Halteplatten (4, 5) aufweist, die von einem zentralen, am Fahrzeugrahmen befestigbaren langgestreckten Träger (1) durchsetzt sind und an ihrem Umfang mit den Aussparungen (6-9) versehen sind.

7. Vorrichtung nach Anspruch 6, dadurch gekennzeichnet, daß der Träger (1) aus zwei miteinander verbindbaren Teilen (1', 1'') zusammengesetzt ist, von denen der eine (1') am Fahrzeugrahmen befestigbar ist und der andere (1'') die Halteplatten (4, 5) trägt.

8. Vorrichtung nach Anspruch 7, dadurch gekennzeichnet, daß der die Halteplatten (4, 5) tragende Teil (1'') auf den anderen Teil (1') koaxial aufschiebbar ist.

9. Vorrichtung nach einem der Ansprüche 6 bis 8, dadurch gekennzeichnet, daß die Spannbänder (11-14) um einen oder zwei Druckluftbehälter (10) und um den Träger (1) im Bereich neben den Halteplatten (4, 5) geführt sind.
